# EUROPEAN PATENT APPLICATION

(11) **EP 1 127 657 A1**
(43) Date of publication of application: **29.08.2001**
(21) Application number: 99935064.8
(22) Date of filing: 05.08.1999
(51) Int. Cl.: B23Q 17/00, B23Q 17/09, H04B 15/00, H04B 7/12

(54) **APPARATUS FOR DETECTING OPERATION OF MACHINE TOOL**

(30) Priority: 12.08.1998 JP 26224998
(71) Applicant: NT Engineering Kabushiki Kaisha, Takahama-shi, Aichi-ken 444-1335 (JP); Masuda, Yukio, Ichikawa-shi, Chiba-ken 272-0114 (JP)
(72) Inventor: MASUDA, Yukio, Ichikawa-shi, Chiba 272-0114 (JP); KOMAI, Yasuhiro, Takahama-shi, Aichi 444-1335 (JP)
(74) Representative: Borchert, Uwe Rudolf, Dipl.-Ing.
(86) International application number: JP9904222
(87) International publication number: WO0009289

(57) **Abstract**

The invention reverts to an apparatus for detecting operational conditions of a working machine, wherein are provided:
a high-frequency oscillating demodulation circuit comprising
a crystal resonator;
a coil directly connected to said high-frequency oscillating demodulation circuit; and
a measuring core capable of varying oscillation frequencies of said high-frequency oscillating demodulation circuit by moving inside said coil relatively thereto.

## Description

### Technical Field of the Invention

This invention relates to an apparatus for detecting operational conditions such that various operational conditions of a working machine are detected.

### Background Art

Conventionally, various operations carried out by working machines are automated. In this connection, there have been demands for automatic detection of machining aspects such as how cutting tools are carrying out cutting work, how workpieces are clamped, and whether or not working machines are operating properly. Such being the case, a number of methods have been proposed, such as a method of detecting worn and/or chipped conditions of cutting tools by means of sensors, a method of measuring cutting resistance acting on machines and/or jigs, and a method of measuring vibrations and/or AE signals transmitted to the articles mentioned above.

Specifically, in the case of lathing work, a method is known whereby tool holder deformation caused by cutting resistance is detected by means of strain gages. Moreover, as regards drilling work, a method is known whereby thrust that varies as a drill becomes worn is detected by means of a tool holder clutch and a device like a proximity sensor. In addition to the above is known a method whereby vibrations and/or AE signals transmitted through working machines and/or jigs are detected by means of sensors in which piezoelectric elements are utilized.

However, each of the above-mentioned methods has problems with the reliability of signals detected during actual machining work as well as with the method of processing the above-mentioned signals, thus rendering it difficult to put any of such methods to practical use. For example, in the event that cutting resistance is measured by means of a strain gage, then the value of the resistance of the bridge circuit used in the pertinent measurement undergoes drifting. Such being the case, it is impossible to determine whether any value obtained from the above-mentioned strain gage is due to a change in cutting resistance or due to a change caused by drifting, thus resulting in a problem being pointed out to the effect that it is impossible to accurately detect changes in the above-mentioned cutting resistance.

In connection with the above, it is conceivable to use a differential transformer whereby little drifting takes place. However, in the case of such a differential transformer, the sensor portion is so large that it is difficult to place the above-mentioned sensor in proximity to a location where detection is to be carried out (such as a location where machining is performed). Such being the case, S/N ratios of detected signals are aggravated, thereby reducing the accuracy of detection. Besides, a differential transformer, which is a linear sensor for detecting linear changes in cutting resistance, does not have a function as a vibration sensor for accurately detecting vibrations. Furthermore, even if an attempt is made to detect cutting vibrations by means of a piezoelectric element that is suited to the detection of accelerations, the above-mentioned piezoelectric element is capable only of detecting vibrations and therefore cannot be put to actual use.

The present invention seeks to solve this problem, and it is an object of this invention to provide a simply constructed apparatus for detecting operational conditions of a working machine such that it is possible to automatically detect, with high precision, operational conditions of the above-mentioned working machine.

### Disclosure of the Invention

In the event that operational conditions of a working machine is to be automatically detected by means of sensing elements, it is possible to improve the reliability of detection if not only linear components of those parameters like cutting resistance which integration-wise undergo elapsed-time-based variations but also dynamic components of those phenomena like vibrations which differentiation-wise undergo moment-by-moment variations are detected. For this purpose, it is necessary to simultaneously take out integration-wise variations and differentiation-wise variations. Besides, it is desirable that the pertinent sensing device should consist of a single small-sized sensing element that is capable of simultaneously detecting integration-wise variation input and differentiation-wise variation-wise input, since it is necessary to place any sensing element in proximity to a position where detection is to be carried out. Moreover, it is necessary, on one hand, that the above-mentioned single sensing element should be stable on an elapsed-time basis and should not undergo drifting so that linear components of parameters such as cutting resistance can be measured. It is further necessary, on the other hand, that the above-mentioned single sensing element should be capable of accurately detecting low to high frequencies so that dynamic components of phenomena such as vibrations can be measured.

On the basis of the above, the apparatus for detecting operational conditions of a working machine relating to the present invention comprises a high-frequency wave oscillation/modulation circuit equipped with a crystal resonator, a coil directly connected the above-mentioned high-frequency wave oscillation/modulation circuit, and a measuring core that is capable of varying oscillation frequencies of the above-mentioned high-frequency wave oscillation/modulation circuit by moving inside the above-mentioned coil relatively thereto.

High-frequency waves in a megahertz (MHZ) band generated in the high-frequency wave oscillation/modulation circuit are applied directly to the coil, thereby causing the coil to have inductance characteristics. Such being the case, when the measuring core moves inside the coil relatively thereto, the magnetic field undergoes a change, thereby causing the inductance of the above-mentioned coil to change. Such a change in inductance directly undergoes fine modulation (FM), and modulated waves are processed as detected signals. Thus the above-mentioned apparatus for detecting operational conditions of a working machine serves as a linear dynamic sensor.

In this connection, since a very high oscillating frequency generated by the crystal resonator is used, a very stable oscillating frequency is available, and moreover, the problem of a fundamental frequency undergoing drifting is eliminated. Furthermore, since a very high frequency is used, the movement of the measuring core inside the coil can lead to a sufficient change in inductance even if the number of turns of the coil is small, and therefore, it is possible to effectively miniaturize the above-mentioned coil and aforementioned measuring core.

Moreover, the above-mentioned apparatus for detecting operational conditions of a working machine is constructed such that the coil is connected directly to the high-frequency wave oscillation/modulation circuit, and therefore, induction as applied is the only source of action. Such being the case, even if the coil moves fast, induced electromotive force is not readily generated, with the result that only the inductance of the coil undergoes a change. Besides, since the fundamental oscillation frequency is high enough to be in a megahertz (MHZ) band, the above-mentioned apparatus for detecting operational conditions of a working machine can be applied satisfactorily even when frequencies in a kilohertz (KHZ) band, which are regarded as necessary for detecting vibrations produced during general machining, is to be detected.

As mentioned above, linear components and dynamic components can all be taken out as changes in frequencies. Therefore, if such signals are directly modulated and transmitted outside, and if such signals are subsequently received and demodulated outside, then it follows that operational conditions of the working machine to be inspected are taken outside without undergoing any change. By this method, signals are transferred at the same frequency as the one at which they are originally transmitted by the sensor, as distinct from a case where transference of signals by using voltages or other means is subject to effects of phenomena such as drifting. Accordingly, this method has the advantage that the above-mentioned signals can be transferred, as they are, to the final judgment location without undergoing any change en route.

Namely, in the case of the detection of static changes of parameters such as cutting resistance, the detection criteria are stable, since no drifting takes place,'with the result that the amount of change, as it is, is represented by signals. Therefore, it is possible to accurately detect not only elapsed-time-based changes in cutting resistance over a long span of time but also slight changes. On the other hand, in the event that dynamic components of phenomena such as cutting vibrations are to be detected, the small size of the sensor permits the sensor to be placed in the neighborhood of the vibration source, thereby making it possible to more directly detect pertinent vibrations. Therefore, it can be said that such signals are that type of dynamic signals which undergo only slight damping en route, while involving only a small quantity of disturbance factors and having high S/N ratios.

Furthermore, high-frequency vibrations in a megahertz (MHZ) band generated by the crystal resonator are applied directly to the coil, which, in turn, is oscillated to obtain inductance, then the relative movement of the core inside this coil is changed directly into inductance having the applied frequency, and the resulting change in inductance is directly subjected to fine modulation (FM) and is used as detection signals. Namely, the fundamental oscillation frequency generated by the crystal resonator is high enough to be in a megahertz (MHZ) band, and therefore, if the inductance of the coil that is directly energized at the above-mentioned frequency is directly subjected to fine modulation (FM) and is taken out, then the above-mentioned inductance serves, as it is, as detected signals. In this connection, since high-frequency waves in a megahertz (MHZ) band are used as detection signals, the above-mentioned high-frequency waves can be directly subjected to fine modulation (FM) and can be transmitted by means of electromagnetic waves. It is also possible to transmit the above-mentioned high-frequency waves through wire.

Besides, signals detected by the sensor contain not only static linear components but also dynamic components. The above-mentioned apparatus for detecting operational conditions of a working machine is constructed such that the aforementioned signals are transmitted outside either by means of electromagnetic waves or through wire, then such signals are received by a controller placed outside, and static components are separated from dynamic components. In the next place, the frequencies of static linear components of parameters such as cutting resistance are converted into linear values by means of a frequency counter, and then the resulting values and changes are recognized. On the other hand, dynamic components of phenomena such as mechanical vibrations are converted into voltage signals by means of an F/V (frequency/voltage) converter, and then relevant conditions are recognized. Since two types of input signals, namely static linear components and dynamic components, are taken out of a single sensor, the resulting accuracy of detection and of analysis improves significantly.

### Brief Description of the Drawings

FIG. 1 is an overall perspective view of a working machine to which is applied an apparatus for detecting operational conditions relating to the first embodiment of the present invention.

FIG. 2 is an illustration of a tool holder which is a component of the aforementioned working machine and which includes the above-mentioned apparatus for detecting operational conditions.

FIG. 3 is a schematic diagram of the above-mentioned apparatus for detecting operational conditions.

FIG. 4 is a circuit diagram of a controller that is a component of the above-mentioned working machine.

FIG. 5 is a chart showing linear static values detected.

FIG. 6 is a chart showing dynamic values detected.

FIG. 7 is an overall perspective view of a working machine to which is applied an apparatus for detecting operational conditions relating to the second embodiment of the present invention.

FIG. 8 is an illustration of a longitudinal sectional view of a tool holder that is a component of the above-mentioned working machine relating to the second embodiment.

FIG. 9 is a circuit diagram of the above-mentioned apparatus for detecting operational conditions relating to the second embodiment.

FIG. 10 is a circuit diagram of a controller that is a component of the above-mentioned apparatus for detecting operational conditions relating to the second embodiment.

FIG. 11 is a fragmentary sectional illustration of a tool holder in which is mounted an apparatus for detecting operational conditions relating to the third embodiment of the present invention.

FIG. 12 is a chart showing linear static values detected.

FIG. 13 is a chart showing dynamic values detected.

FIG. 14 is a fragmentary sectional illustration of a clamping device in which is mounted an apparatus for detecting operational conditions relating to the fourth embodiment of the present invention.

FIG. 15 is a fragmentary sectional illustration of a clamping device in which is mounted an apparatus for detecting operational conditions relating to the fifth embodiment of the present invention.

FIG. 16 is a fragmentary sectional illustration of a sliding device in which is mounted an apparatus for detecting operational conditions relating to the sixth embodiment of the present invention.

### Best Configurations for Carrying Out the Invention

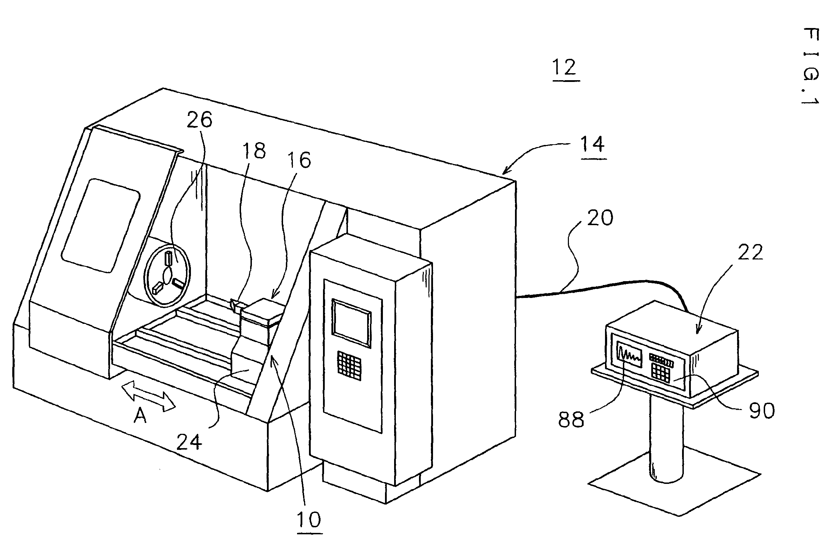

FIG. 1 is an overall perspective illustration of a working machine 12 to which is applied an apparatus for detecting operational conditions 10 relating to the first embodiment of the present invention. The above-mentioned working machine 12 comprises a machine tool 14, a tool holder (or a holder) 16 that can be readily mounted on or removed from the above-mentioned machine tool 14, a cutting tool 18 mounted on the above-mentioned tool holder 16 in such a way that replacement is permitted to be carried out, and a controller 22 for carrying out communication with the above-mentioned tool holder 16 by means of a wire 20 for transmitting signals or the like.

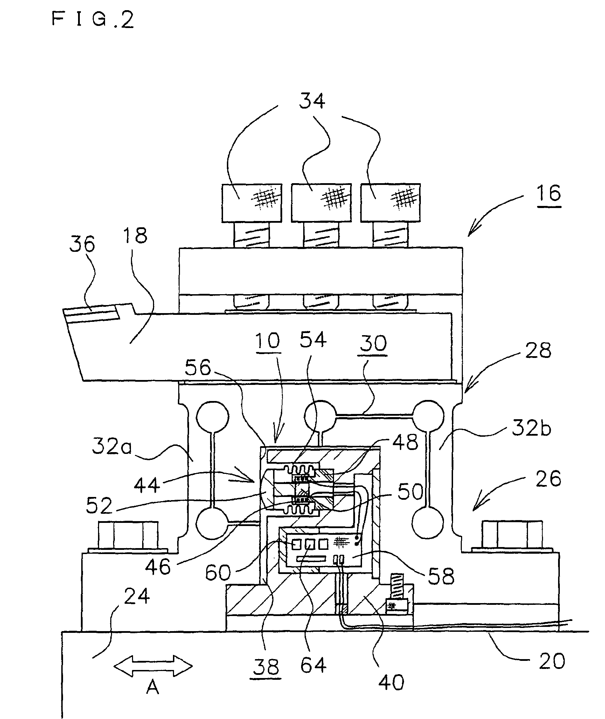

The tool holder 16 is mounted on a sliding base 24 and is capable of advancing and retracting freely with respect to a spindle 26 equipped with a chuck for holding a workpiece. As shown in FIG. 2, the tool holder 16 comprises a fixed portion 26 that is fixed to the sliding base 24 and a movable portion 28 that is capable of moving with respect to the above-mentioned fixed portion 26 in the direction of the arrow A Between the fixed portion 26 and the movable portion 28 are provided elastic deformation portions 32a and 32b both of which are capable of moving freely within a given range in the direction of the arrow A on account of a slit 30 that is roughly S-shaped. The above-mentioned elastic deformation portions 32a and 32b are established such that cutting resistance is sufficiently withstood, whereas slight deformation takes place under the action of cutting resistance. The elastic deformation portions 32a and 32b are further established such that slight vibratory deformations take place on account of vibrations generated during cutting work. On the movable portion 28 is mounted a cutting tool 18 by means of bolts 34, and at one end of the cutting tool is provided a tip 36 for turning. When cutting resistance acts on the above-mentioned tip 36, the tool holder 16 undergoes elastic deformation, and the movable portion 28 moves in the direction of the arrow A.

In the fixed portion 26 of the tool holder 16 is formed a center hole 38 that partially overlaps the slit 30. An adapter 40 for mounting a sensor is included in the above-mentioned center hole 38. The above-mentioned adapter 40 is fixed to the fixed portion 26 of the tool holder 16. Moreover, an apparatus for detecting operational conditions 10 relating to the first embodiment is mounted on the above-mentioned adapter 40. The apparatus for detecting operational conditions 10 comprises a displacement detection sensor (a linear sensor) 44 for detecting phenomena relating to the cutting tool 18, such as abnormal cutting work, on the basis of the magnitude of cutting resistance and vibrations including chattering.

The sensor 44 has a coil 46 that is fixed to the adapter 40. A measuring core 50 is placed in such a way as to be capable of advancing and retracting freely along a guiding portion 48 on which is mounted the above-mentioned coil 46. The measuring core 50 is provided in the contact portion 52. Moreover, one end of a metallic bellows capsule 54 is fixed to the above-mentioned contact portion 52. The coil 46 is covered with the above-mentioned bellows capsule 54. The guiding portion 48 is fixed to the fixed portion 29 with the adapter 40 interposed in-between. On the other hand, the contact portion 52 is in contact with an interior wall surface 56 of the movable portion 28. An electronic substrate 58 is mounted on the adapter 40. In this arrangement, the coil 46 is fixed to the adapter 40, but it is permissible, instead, to fix the measuring core 50 to the above-mentioned adapter 40.

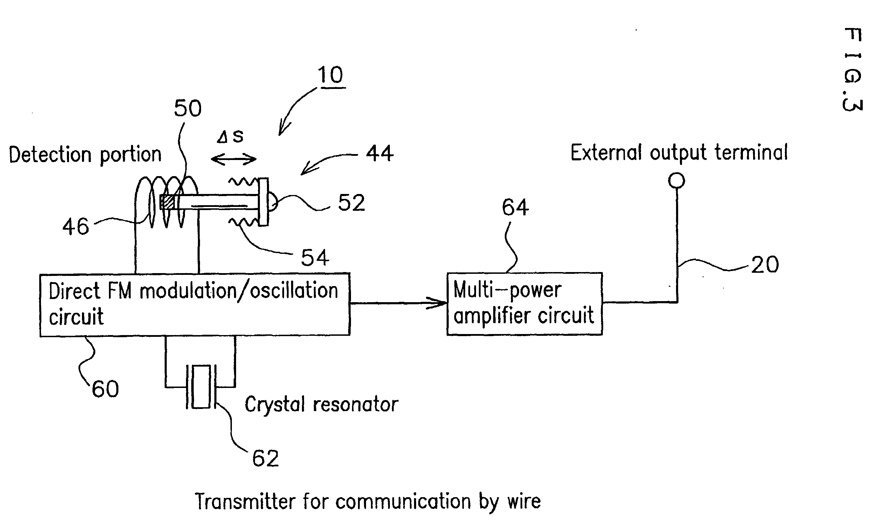

As shown in FIG. 3, the coil 46 of the sensor 44 is connected directly to a direct FM modulation/oscillation circuit (a high-frequency oscillation/modulation circuit) 60. Moreover, a crystal resonator 62, which is a crystal oscillator, is provided in the above-mentioned direct FM modulation/oscillation circuit 60. A multi-power amplifier circuit 64 is connected to the above-mentioned direct FM modulation/oscillation circuit 60. The above-mentioned multi-power amplifier circuit 64 is provided with a wire 20. The direct FM modulation/oscillation circuit 60 and the multi-power amplifier circuit 64 are mounted on the electronic substrate 58 (see FIG. 2).

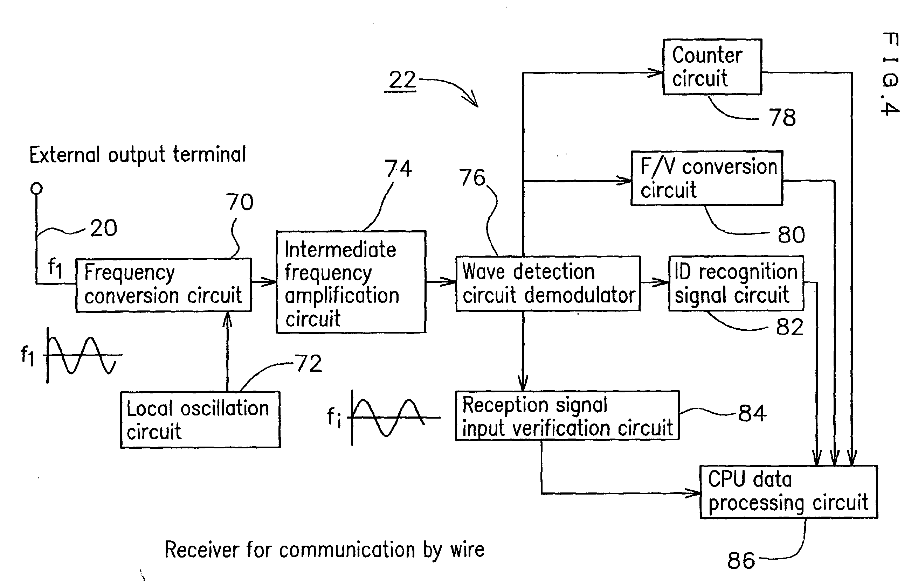

As shown in FIG. 4, the controller 22 comprises a frequency conversion circuit 70 that is connected to the wire 20. A local oscillation circuit 72 is connected to the above-mentioned frequency conversion circuit 70. An intermediate frequency wave amplification circuit 74 is connected to the above-mentioned frequency conversion circuit 70. A wave detection circuit demodulator 76 is connected to the above-mentioned intermediate frequency wave amplification circuit 74. The wave detection circuit demodulator 76 has the function of separating carrier waves from signal waves and of taking out those signals which are to be transmitted. A counter circuit 78, an F/V conversion circuit 80, an ID recognition signal circuit 82, and a reception signal input verification circuit 84 are connected to the above mentioned wave detection circuit demodulator 76. The counter circuit 78, the F/V conversion circuit 80, ID recognition signal circuit 82, and the reception signal input verification circuit 84 are connected to a CPU data processing circuit 86. The final instructions/judgment are/is given/made by the above-mentioned CPU data processing circuit 86.

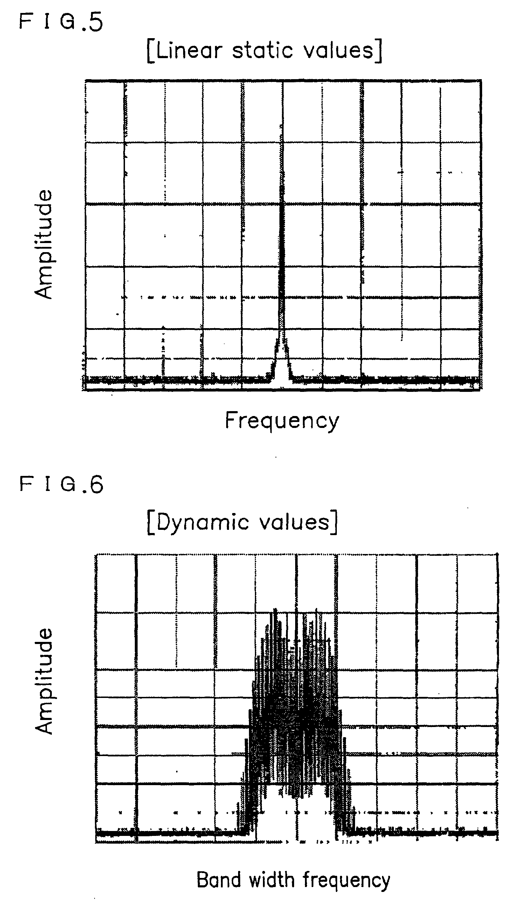

As shown in FIG. 1, a CRT (or LCD) indicator portion 88 and a detection judgment LED bar 90 are provided on the front face of the controller 22. FIG. 5 shows an indication that appears on the CRT indicator portion 88 when linear static values such as cutting resistance values are detected, and FIG. 6 shows an indication that appears on the CRT indicator portion 88 when linear dynamic values are detected on account of the occurrence of phenomena such as vibrations.

The apparatus for detecting operational conditions 10, which relates to the first embodiment and which is constructed as described above, is applied to the working machine 12. An explanation will be given below regarding the operation of the above mentioned working machine 12.

As shown in FIG. 1, in the case of the machine tool 14, the cutting tool 18 is mounted on the tool holder 16, and moreover, a workpiece that is not shown is fixed to the spindle 26. With the spindle 26 set in rotating motion, the sliding base 24 moves toward the spindle 26, and then given machining work is started with a cutting tool interposed in-between.

At this juncture, when cutting resistance acts on the tip 36 that is provided at one end of the cutting tool, the elastic deformation portions 32a and 32b of the tool holder 16 to which is fixed the above-mentioned cutting tool 18 undergoes a slight deformation, thereby causing the movable portion 28 to move in the direction of the arrow A On account of the above, the contact portion 52 comes into contact with the interior wall surface 56 of the movable portion 28 and moves in the direction of the arrow A just as the movable portion 28 does. The measuring core 50 is provided in the contact portion 52. The above-mentioned measuring core 50 moves inside the coil 46, thereby causing cutting resistance to be detected by the sensor 44 as linear static values. On the other hand, when vibrations including chattering generated during cutting work act on the cutting tool 18, the measuring core 50 moves likewise inside the coil 46, thereby causing such vibrations to be detected by the sensor 44 as dynamic values.

In this regard, as shown in FIG. 3, the coil 46 is directly connected to the direct FM modulation/oscillation circuit 60, in which the crystal resonator 62 is provided. When the position of the measuring core 50 undergoes a change, the resonator frequency changes, depending on the amount of the change in the position of the above-mentioned measuring core 50. Signals received from the direct FM modulation/oscillation circuit 60 are transmitted to the multi-power amplifier circuit 64, in which the frequency is stepped up, and then the above-mentioned signals are transmitted to the controller 22 through the wire 20. As shown in FIG. 4, the local oscillation frequency in the local oscillation circuit 72 is subtracted from the input signal frequency by the frequency conversion circuit 70, and then the signal frequency, which is the difference obtained thus, is transmitted to the intermediate frequency amplification circuit 74.

Furthermore, the signal frequency is separated in the wave detection circuit demodulator 76. Those modulated signals of displacements and vibrations of the cutting tool 18 which are detected in the sensor 44 are read in the counter circuit 78 by such a method as is the case with a counter. Moreover, in the F/V conversion circuit 80, demodulated signal frequencies pertaining to displacements and vibrations of the cutting tool 18 are read in KHZ, and resulting values are expressed in terms of voltage variations. Moreover, when erroneous operation prevention signals are obtained by the ID recognition signal circuit 82 and by the reception signal input verification circuit 84, the CPU data processing circuit 86 receives the above-mentioned erroneous operation prevention signals and gives/makes the final instructions/judgment regarding the detected signals.

As mentioned above, in the case of the apparatus for detecting operational conditions 10 relating to the first embodiment, not only is the coil 44 of the sensor 44 directly connected to the direct FM modulation/oscillation circuit 60, but the crystal resonator 62, which is a crystal oscillator, is provided in the above-mentioned direct FM modulation/oscillation circuit 60, and the measuring core 50 moves inside the above-mentioned coil 46, thereby directly subjecting the above-mentioned crystal resonator 62 to fine modulation. On account of the above, linear components of parameters such as cutting resistance acting on the cutting tool 18 and dynamic components of phenomena such as vibrations can all be detected with high precision, thereby leading to the advantage that the accuracy *of* detection by the sensor 44 and the accuracy of analysis improves significantly. Furthermore, it is possible to effectively miniaturize and simplify the entire apparatus for detecting operational conditions 10 that includes the sensor 44.

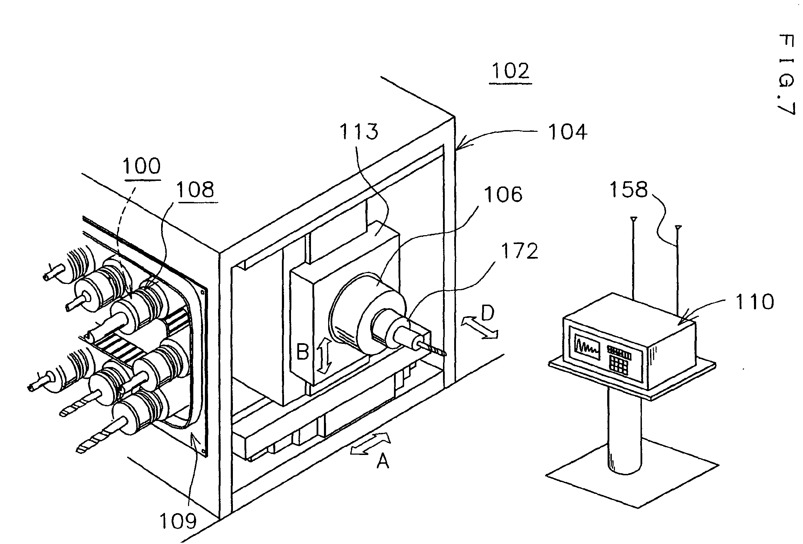

FIG. 7 is an overall perspective illustration of a working machine 102 to which is applied an apparatus for detecting operational conditions 100 relating to the second embodiment of the present invention. The above-mentioned working machine 102 comprises a machine tool 104, a plurality of tool holders (holders) 108 each of which can be readily mounted on or removed from a spindle 106 of the above-mentioned machine tool 104, an ATC magazine 109 for mounting any one of the above-mentioned tool holders 108 on the above-mentioned spindle 106 (of all of the tool holders 108, that tool holder which is mounted on the spindle 106 will hereinafter be referred to as the tool holder 108) and for readily replacing the tool holder 108 with any one of the other tool holders 108, and a controller 110 for carrying out radio communication with the above-mentioned tool holder 108 by means of electromagnetic waves. The spindle 106 is linked to a rotary driving source that is not shown, and is supported by a movable base 113 in such a way that rotation is permitted. Moreover, the above-mentioned spindle 106 is capable of moving freely in the direction of the arrow A (horizontally), in the direction of arrow B (vertically), and in the direction of the arrow D (axially).

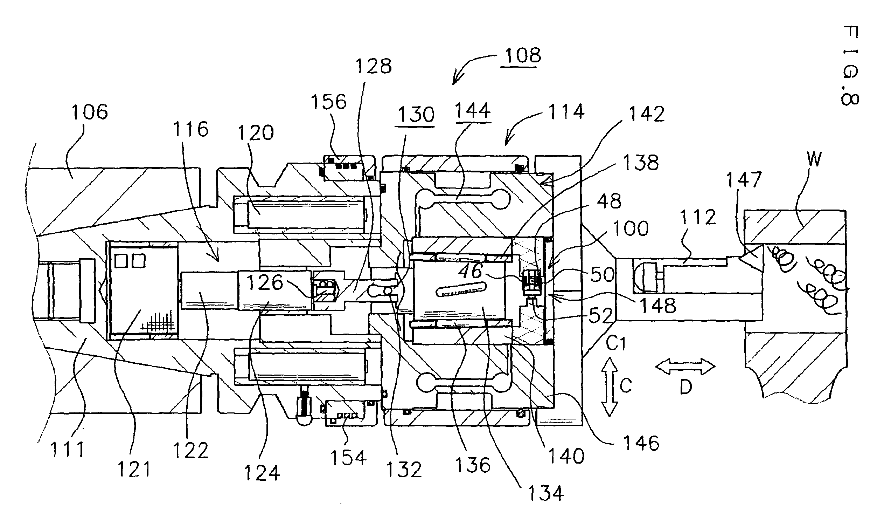

As shown in FIG. 8, the tool holder 108 has, at one end, a shank 111 that is fitted into the spindle 106, and at the other end of the tool holder 108 is mounted a boring bar (a tool) 12. The above-mentioned tool holder 108 comprises a correction head 114 capable of adjusting the position of the boring bar 112 in the radial direction of the spindle 106 (in the direction of the arrow C), a driving device 116 for driving the above-mentioned correction head 114, the apparatus for detecting operational conditions 100 relating to the second embodiment for detecting the adjustment conditions of the above-mentioned correction head 114, a battery (a DC power supply) 120, and an electronic substrate 121.

The driving device 116 has a DC electric motor 122 which is included in the tool holder 108 and which is capable of normal and reverse rotations. A speed reducer 124 is linked to the driving shaft of the above-mentioned DC electric motor 122. The speed reduction ratio of the above-mentioned speed reducer 124 is set at a high value. A driving adapter 128 is linked to an output shaft 126 of the speed reducer 124. A slit 130, which extends axially (in the direction of the arrow D), is formed at one end of the above-mentioned driving adapter 128. A conical tapered driving shaft 134 engages with the above-mentioned slit 130 by means of a pin 132 in such a way that the conical tapered driving shaft 134 is permitted to advance and retract freely. On the exterior peripheral surface of the tapered driving shaft 134 are located a plurality of slightly inclined rollers 136, with a cage 138 serving as a retainer, in such a way that the rollers 136 are permitted to roll freely. On the outside of the above-mentioned rollers 136 is provided a power unit 140.

At each end of the power unit 140 are provided a pair of slits (not shown) that are close to each other. When the tapered driving shaft 134 is caused to rotate, the tapered driving shaft 134 and the rollers 136 move in the longitudinal direction while rotating, thereby permitting the power unit 140 to expand and contract radially within given limits. On the exterior periphery of the power unit is placed a head housing 142, which is approximately cylindrical and on whose exterior peripheral surface is formed an S-shaped slit 144. The head housing 142 has a movable portion 146. When the above-mentioned power unit i40 expands radially, the movable portion 146 is pressed radially outward, thereby being displaced in the direction of the arrow C1 with flexibility provided by the S-shaped slit 144. The boring bar 112 is mounted on the movable portion 146. A reamer 147 is fixed to one end of the above-mentioned boring bar 112.

The apparatus for detecting operational conditions 100 comprises a displacement detection sensor (a linear sensor) 148 for detecting corrected displacements of the head housing 142 in the direction of the arrow C. The above-mentioned sensor 148 is constructed similarly to the sensor 44 relating to the first embodiment, and therefore, identical components are denoted by identical reference symbols, with detailed explanations omitted.

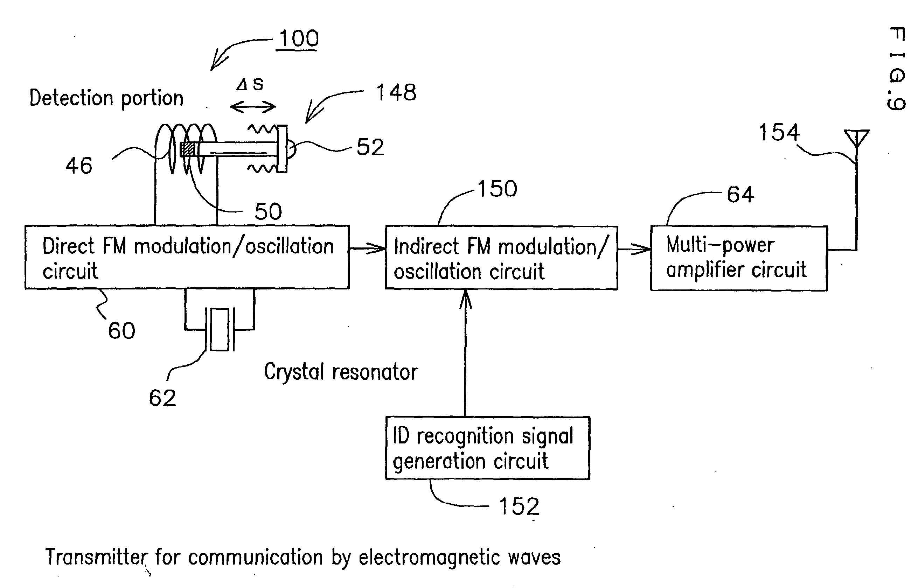

As shown in FIG. 9, a coil 46 of the sensor 148 is connected to a direct FM modulation/oscillation circuit 60. Moreover, a crystal resonator 62 is provided in the above-mentioned direct FM modulation/oscillation circuit 60. An indirect FM modulation/oscillation circuit 150 is connected to the direct FM modulation/oscillation circuit 60. Furthermore, ID recognition signal waves fs0 are inputted into the above-mentioned indirect FM modulation/oscillation circuit 150 from an ID recognition signal generation circuit 152. The indirect FM modulation/oscillation circuit 150 is connected to a multi-power amplifier circuit 64. The above-mentioned multi-power amplifier circuit 64 is provided with an antenna wire 154. As shown in FIG. 8, the antenna wire 154 is mounted on the exterior periphery of the tool holder 108, being surrounded by a cover member 154.

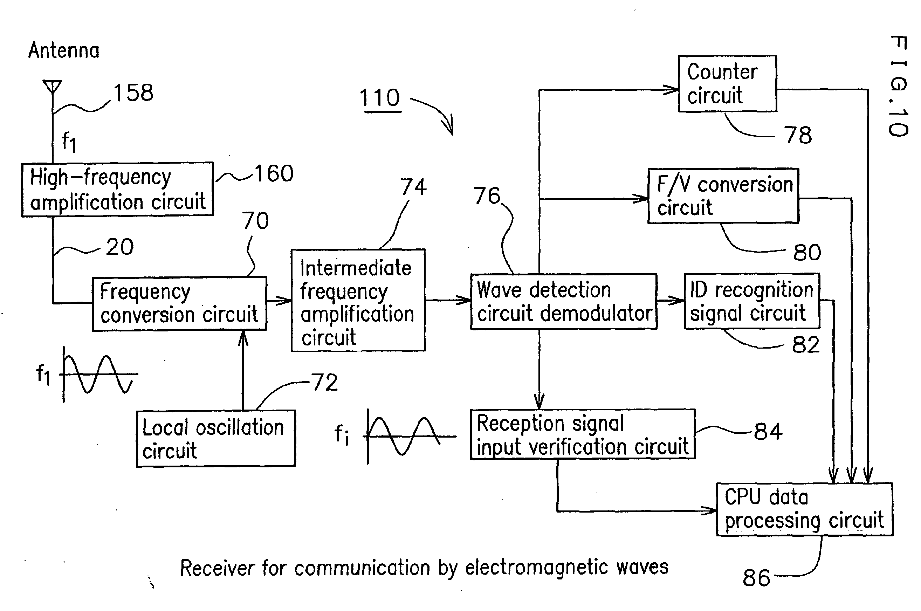

As shown in FIG. 10, the controller 110 comprises an antenna wire 158 for receiving electromagnetic waves transmitted from the antenna wire 154 of the tool holder 108. A high-frequency amplification circuit 160 is connected to the above-mentioned antenna wire 158. A frequency conversion circuit 70 is connected the above-mentioned high-frequency amplification circuit 160. The rest of the arrangement is similar to that of the controller 22 relating to the first embodiment, and therefore, identical components are denoted by identical reference symbols, with detailed explanations omitted.

An explanation will be given below regarding the operation of the apparatus for detecting operational conditions 100, which relates to the second embodiment and which is constructed as described above.

In the first place, signals are transmitted by means of electromagnetic waves from the controller 110 to the tool holder 108 through the antenna wire 154, and then driving signals are inputted into the driving device 116. On account of the above, the DC electric motor 122 is set in rotating motion. As shown in FIG. 8, the rotating speed of the DC electric motor 122 is significantly reduced by the speed reducer 124, and then the driving adapter 128 that is linked to the output shaft 126 of the above-mentioned speed reducer 124 is set rotating. Thereupon the tapered driving shaft 134 that engages with the above-mentioned driving adapter by means of the pin 132 inserted through the slit 130 is set rotating. Moreover, the rollers 136 that are in sliding contact with the exterior peripheral surface of the tapered driving shaft 134 are set rotating.

The rollers 136 are in sliding contact with the exterior peripheral surface of the driving shaft 134 such that the rollers 136 are circumferentially inclined. The rolling of the rollers 136 causes the power unit 140 to radially expand or contract (in the direction of the arrow C) within given limits. When the above-mentioned power unit 140 expands or contracts in the direction of the arrow C, the sensor 148 is pressed, and displacements of the above-mentioned power unit 140, namely displacements of the correction head 114, are transmitted by means of electromagnetic waves.

In specific terms, the coil 46 is directly connected to the direct FM modulation/oscillation circuit 60, in which the crystal resonator 62 is provided. When the position of the measuring core 50 undergoes a change, the resonator frequency changes, depending on the amount of the change in the position of the above-mentioned measuring core 50. Signals received from the direct FM modulation/oscillation circuit 60 are transmitted to the indirect FM modulation/oscillation circuit 150. Moreover, ID recognition signal waves are inputted from the ID recognition signal generation circuit 152 into the above-mentioned indirect FM modulation/oscillation circuit 150. The above-mentioned ID recognition signal waves are transmitted from indirect FM modulation/oscillation circuit 150 to the multi-power amplifier circuit 64, in which the frequency is stepped up, and then the above-mentioned signals are transmitted from the antenna wire 154 to the controller 110 through the antenna wire 158. As shown in FIG. 10, in the case of the controller 110, the signal frequency that is amplified by being taken into the high-frequency amplification circuit 160 is transmitted to the frequency conversion circuit 70, in which the above-mentioned signal frequency is processed similarly to the case of the controller 22 relating to the first embodiment.

In the case of the second embodiment, therefore, when setting work for the correction head 114 is to be carried out, linear values obtained from the sensor 148 are regarded as detection signals, which are used as feedback signals for detecting the amount of displacement of the tool holder 108. On the other hand, when actual cutting work is to be carried out, the above-mentioned detection signals are used for detecting cutting resistance acting on the tool holder 108, as well as for detecting vibratory conditions. For example, it is possible to detect magnitudes of cutting resistance on the basis of linear static values, and moreover, it is possible to determine, on the basis of vibratory conditions and values pertaining to the tool holder 108, whether cutting work is carried out properly and whether abnormalities are present. Consequently, a desirable effect is obtained in that the use of the sole sensor 148 makes it possible to easily carry out with high precision the detection of the amount of correction during setting work and the monitoring of cutting conditions during actual cutting work.

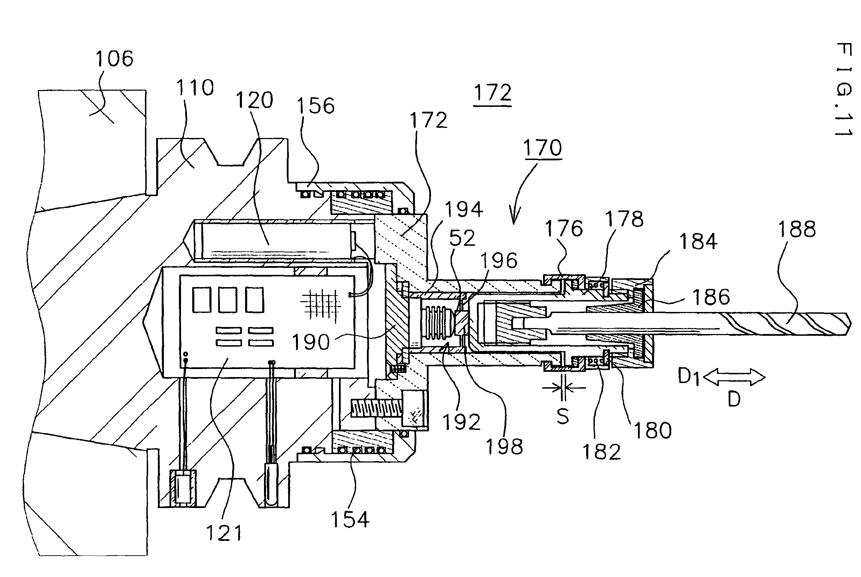

FIG. 11 is a fragmentary sectional illustration of a tool holder 172 in which is mounted an apparatus for detecting operational conditions 170 relating to the third embodiment of the present invention. The above-mentioned tool holder 172 is mounted in a magazine 109 that is identical with the magazine 109 provided in the machine tool 104 of the working magazine 102 shown in FIG. 7, and is fixed to a spindle 106, as the need arises. The above-mentioned sensor 148 is constructed similarly to the sensor 44 relating to the first embodiment, and therefore, identical components are denoted by identical reference symbols, with detailed explanations omitted. In this regard, each of those components of the tool holder 172 which are identical with the corresponding components of the tool holder 108 relating to the second embodiment is denoted by an identical reference symbol, with detailed explanations omitted.

The tool holder 172 comprises an approximately cylindrical drill holder 174. At one end of the above-mentioned drill holder 174 is mounted, by means of a holding ring 176, a cylindrical stub holder 178 equipped with a bottom, with a clearance S provided in-between. A driving collar 180 engages with the drill holder 174. The above-mentioned driving collar 180 is pressed against the above-mentioned drill holder 174 by means of a spring 182. A cap 184 is fixed to one end of the stub holder 178. A drill (a tool) 188 is mounted on the above-mentioned cap 184 with a collet 186 interposed in between. The rear end of the drill 188 is tongued inside the stub holder 178.

A fixing plate 190 is attached to the rear end of the drill holder 174. Between the above-mentioned fixing plate 190 and the stub holder 178 is placed a sensor (a linear sensor) 192 which is a component of the apparatus for detecting operational conditions 170 and which serves to detect the displacement of the drill 188 in the direction of the arrow D. The above-mentioned sensor 192 comprises a sensor holder 194 that is mounted inside the drill holder 174. A contacting movable portion 198 is provided in the above-mentioned sensor holder 194, with an elastic deformation portion 196 interposed in-between. The above-mentioned sensor 192 is constructed similarly to the sensor 44 relating to the first embodiment, and therefore, identical components are denoted by identical reference symbols, with detailed explanations omitted. In this arrangement, the drill 188 is mounted on the tool holder 172, but it is permissible, instead, for another cutting tool serving a similar purpose, such as an end mill, to be mounted on the above-mentioned tool holder 172.

In the case of the apparatus for detecting operational conditions 170, which relates to the third embodiment and which is constructed as described above, the tool holder 172 is set rotating by means of the spindle 1. A workpiece that is not shown is subjected to drilling by means of the drill 188 mounted at one end of the above-mentioned tool holder 172. In this regard, when thrust (cutting thrust) acts on the drill 188 in the direction of the arrow D1, the above-mentioned drill 188 moves in the direction of the arrow D1 within the limits defined by the clearance S between the stub holder 178 and the above-mentioned end of the drill holder 174. On account of the above, the contacting movable portion 198 is pressed by the rear end of the stub holder 177, then the above-mentioned contacting movable portion 198 moves in the direction of the arrow D1, with flexibility provided by the elastic deformation portion 196, and thereupon a measuring core which is a component of the sensor 192 and which is not shown moves.

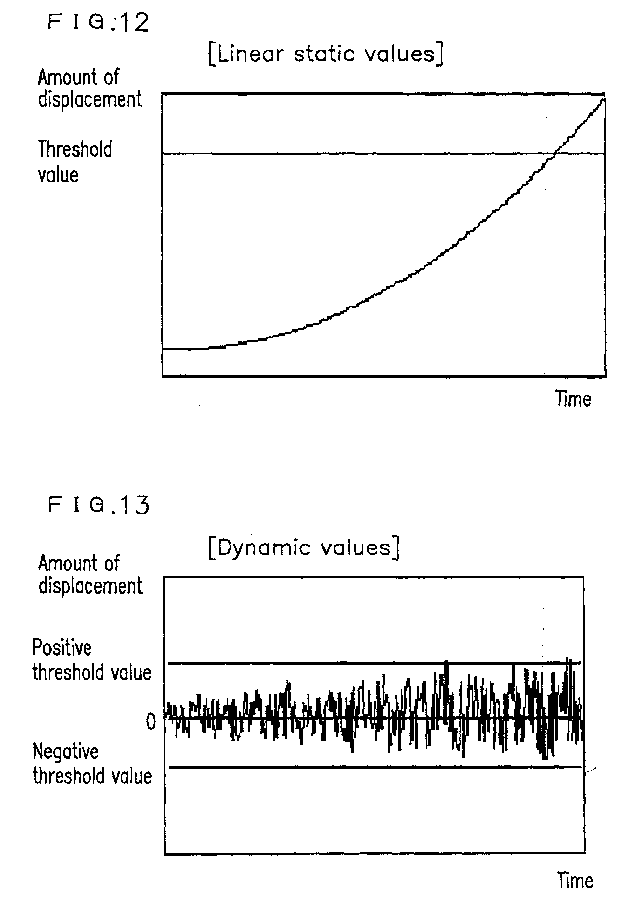

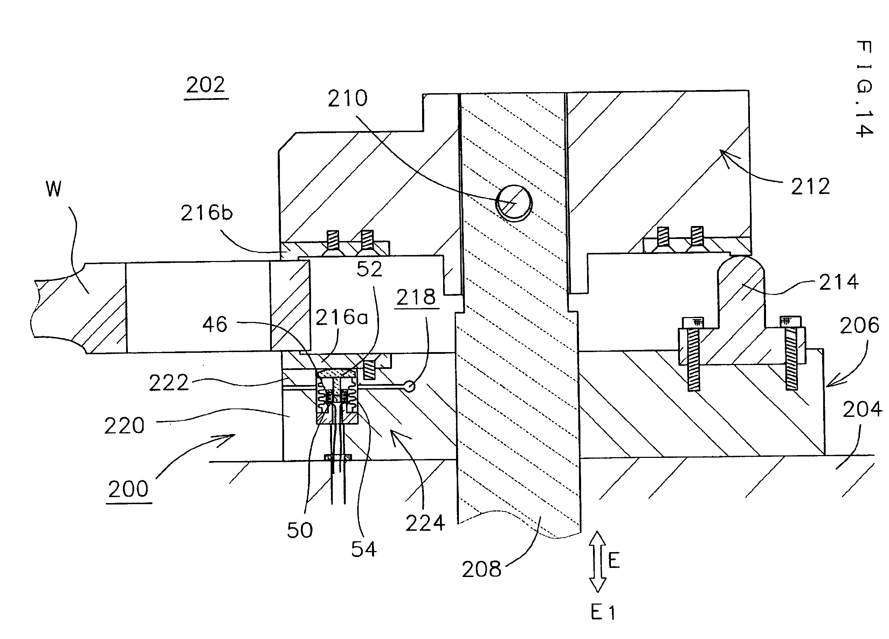

Accordingly, in the case of the third embodiment, desirable effects similar to those of the first and second embodiment can be obtained: for example, cutting thrust and vibrations of the drill 188 can be easily detected with high precision. In this connection, FIG. 12 shows linear static values representing changes in parameters such as cutting resistance, and FIG. 13 shows dynamic values representing phenomena such as vibrations generated by parameters like cutting resistance during machining.

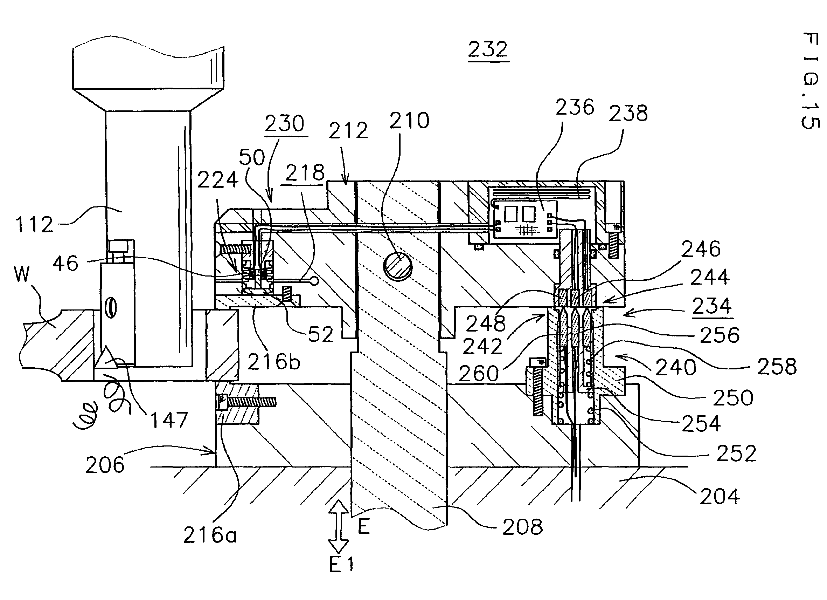

FIG. 14 is a fragmentary sectional illustration of a clamping device 202 in which is mounted an apparatus for detecting operational conditions 200 relating to the fourth embodiment of the present invention. The above-mentioned clamping device 202 comprises a clamping washer 206 fixed to a jig 204, a clamping shaft 208 which is linked to a hydraulic cylinder not shown and which is capable of advancing or retracting freely in the direction of the arrow E, and a clamping block (a clamping member) 212 connected to the above-mentioned clamping shaft 208 in such a way that swiveling and tilting are permitted.

A stop 214 is screwed to one end of the clamping washer 206. On the other hand, clamping pawls 216a and 216b for holding a workpiece W are provided at the other end of the clamping washer 206. At that end of the clamping washer 206 at which the clamping pawl 216a is provided, a slit 218 is formed, with the result that a fixed portion 220 and a deformation portion (a movable portion) 222 are provided. Between the fixed portion 220 and the deformation portion 222 is arranged the apparatus for detecting operational conditions 200, in which is placed a displacement detection sensor (a linear sensor) 224 for detecting pressing force and vibrations acting on the workpiece W. The above-mentioned sensor 224 is constructed similarly to the sensor 44 relating to the first embodiment, and therefore, identical components are denoted by identical reference symbols, with detailed explanations omitted.

In the case of the apparatus for detecting operational conditions 200, which relates to the fourth embodiment and which is constructed as described above, the clamping shaft 208 moves, in the first place, in the direction of the arrow E1 by means of a hydraulic cylinder that is not shown, with the workpiece W placed in the clamped position. On account of the above, the clamping block 212 and the clamping shaft 208 descend while swinging, and then the above-mentioned workpiece W is clamped by means of the clamping pawls 216a and 216b. The clamping block 212 comes into contact with the stop 214 and the workpiece W, thereby providing the workpiece W with a given clamping force.

At this juncture, the deformation portion 222 undergoes elastic deformation, with flexibility provided by the slit 218, thereby causing the position of a measuring core 50 to undergo a change, with the result that the resonator frequency changes, depending on the amount of the above-mentioned change in the position of the measuring core 50. Therefore, it is possible to confirm the clamping condition of the workpiece W and to detect the pertinent clamping force by observing the pressing force on the sensor 224. Furthermore, when the workpiece W is being machined, it is possible to detect machining conditions with high precision by detecting forces and vibrations acting on the deformation portion 222. Moreover, static forces and dynamic vibrations that are detected by means of the sensor 224 are transmitted to an external controller (not shown) through a wire.

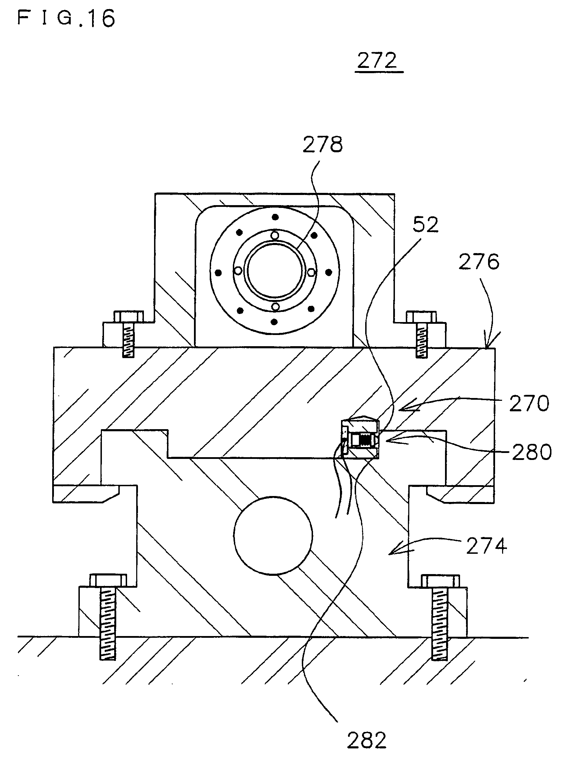

FIG. 15 is a fragmentary sectional illustration of a clamping device 232 in which is mounted an apparatus for detecting operational conditions 230 relating to the fifth embodiment of the present invention. In this regard, each of those components of the apparatus for detecting operational conditions 230 which are identical with the corresponding components of the apparatus for detecting operational conditions 200 relating to the fourth embodiment is denoted by an identical reference symbol, with detailed explanations omitted.

A clamping device 232 comprises a power supply device 234. The above-mentioned power supply device 234 comprises:
a power feeding device 240 that feeds power to an electronic substrate 236 placed inside a clamping block 212, thereby carrying out operations such as radio transmission through an antenna wire 238; and
a power receiving contact portion 244 which is provided in the above-mentioned clamping block 212 and which is directly contacted by a power feeding terminal 242 that is a component of the above-mentioned power feeding device 240.

The contact portion 244 has:
a first power feeding terminal 246 that is connected to the positive electrode; and
an annular second electrode terminal 248 which is placed coaxially around the above-mentioned first power feeding terminal 246 and which is connected to the negative electrode.

The power feeding device 240 comprises:
a base 254 that is placed inside a stop 250 in such a way that the base 254 is permitted to advance and retract freely, with a first spring 252 interposed in-between;
a first electrode portion 256 which is fixed to the above-mentioned base 254 and which, being connected to the positive electrode, is capable of being connected to the first electrode terminal 246; and
an annular second electrode portion 260 which is placed coaxially around the above-mentioned first electrode portion 256 and is placed inside the above-mentioned base 254 in such a way that the annular second electrode portion 260 is permitted to advance and retract freely, with a second spring 258 interposed in-between, and which, being connected to the negative electrode, is capable of being connected to the second electrode terminal 248.

In the case of the apparatus for detecting operational conditions 230, which relates to the fifth embodiment and which is constructed as described above, the clamping shaft 208 moves, in the first place, in the direction of the arrow E1 by means of a hydraulic cylinder that is not shown, with the workpiece W placed in the clamped position. On account of the above, the clamping block 212 comes into contact with the stop 250 and the workpiece W, thereby providing the workpiece W with a given clamping force. At the same time, the first electrode portion 256 and the second electrode portion 260 are connected with the first electrode terminal 246 and the second electrode terminal 248, respectively, thereby feeding power to the electronic substrate 236 placed inside the above-mentioned clamping block 212. Therefore, in the case of the fifth embodiment, not only desirable effects similar to those of the fourth embodiment are obtained, but also another advantage is brought about in that external power supply is carried out through the contact portion, with quick connection/disconnection feasible

FIG. 16 is a fragmentary sectional illustration of a sliding device 272 in which is mounted an apparatus for detecting operational conditions 270 relating to the sixth embodiment of the present invention. The sliding device 272 comprises a sliding base (a supporting member) 274 and a sliding table 276 that is capable of sliding along the above-mentioned sliding base 274. A spindle 278 is provided in the above-mentioned sliding table 276. The apparatus for detecting operational conditions 270 comprises a sensor 280 that is embedded in the sliding table 276. The above-mentioned sensor 280 is constructed similarly to the sensor 44 relating to the first embodiment, and therefore, identical components are denoted by identical reference symbols, with detailed explanations omitted. A contact portion 52, which is a component of the sensor 280, is in contact with the vertical surface 282, which is a component of the sliding base 274.

In the case of the apparatus for detecting operational conditions 270, which relates to the sixth embodiment and which is constructed as described above, a desirable effect is obtained in that when cutting resistance acts on the spindle 278 provided in the sliding table 276, the sensor 280 embedded in the above-mentioned sliding table 276 is capable of detecting slight changes in the position of the above-mentioned sliding table 276 relative to the sliding base 274.

### Possibility of Industrial Utilization

In the case of each of the apparatuses for detecting operational conditions of the present invention, the detection of static changes of parameters such as cutting resistance and dynamic components of phenomena such as cutting vibrations can be carried out by a single sensor, and therefore, the reliability of detection is enhanced, resulting in analysis accuracy being significantly improved.

## Claims

1. An apparatus for detecting operational conditions of a working machine, wherein are provided:
a high-frequency oscillating demodulation circuit comprising a crystal resonator;
a coil directly connected to said high-frequency oscillating demodulation circuit; and
a measuring core capable of varying oscillation frequencies of said high-frequency oscillating demodulation circuit by moving inside said coil relatively thereto.

2. An apparatus for detecting operational conditions of a working machine, whereby are detected given conditions of operations carried out by a tool fixed to a holder in which said apparatus is included, wherein are provided:
a high-frequency oscillating demodulation circuit comprising a crystal resonator;
a coil which is directly connected to said high-frequency oscillating demodulation circuit and which is mounted on a fixed portion or a movable portion of said holder;
a measuring core which is mounted on a fixed portion or a movable portion of said holder and which is capable of varying oscillation frequencies of said high-frequency oscillating demodulation circuit by moving inside said coil relatively thereto when said movable portion undergoes displacement together with said tool.

3. An apparatus for detecting operational conditions of a working machine as defined in Claim 1 or 2, wherein not only linear static signals in a range extending from DC to a kilohertz (KHZ) band but also dynamic signals in the above-mentioned range can be detected by means of an oscillation frequency in a megahertz (MHZ) band.

4. An apparatus for detecting operational conditions of a working machine as defined in Claim 1 or 2, wherein linear static signals in a range extending from DC to a kilohertz (KHZ) band and dynamic signals in the above-mentioned range can be transmitted directly as modulated signals in a megahertz (MHZ) band for radio transmission.

5. An apparatus for detecting operational conditions of a working machine, whereby are detected given conditions of operations carried out by a tool fixed to a holder such that said apparatus is mounted between said holder and a supporting member for supporting said holder in such a way that said holder is permitted to advance and retract freely, wherein are provided:
a high-frequency oscillating demodulation circuit comprising a crystal resonator;
a coil which is directly connected to said high-frequency oscillating demodulation circuit and which is mounted on a fixed portion or a movable portion of said holder;
a measuring core which is mounted on said holder and which is capable of varying oscillation frequencies of said high-frequency oscillating demodulation circuit by moving inside said coil relatively thereto when said tool is in operation.

6. An apparatus for detecting operational conditions of a working machine, whereby are detected given conditions of operations carried out on a tool held under pressure by a clamping member of a clamping device in which said apparatus is mounted, wherein are provided:
a high-frequency oscillating demodulation circuit comprising a crystal resonator;
a coil which is directly connected to said high-frequency oscillating demodulation circuit and which is mounted on a fixed portion or a movable portion of said clamping member; and
a measuring core which is mounted on the fixed portion or the movable portion of said clamping member and which is capable of varying oscillation frequencies of said high-frequency oscillating demodulation circuit by moving inside said coil relatively thereto when said movable portion undergoes displacement together with said workpiece.
